(19)

**Europäisches Patentamt**
**European Patent Office**
**Office européen des brevets**

(11) **EP 4 245 133 A1**

(12) **EUROPEAN PATENT APPLICATION**

(43) Date of publication:
**20.09.2023 Bulletin 2023/38**

(21) Application number: **22382251.1**

(22) Date of filing: **16.03.2022**

(51) International Patent Classification (IPC):
***A01K 29/00*** (2006.01)

(52) Cooperative Patent Classification (CPC):
**A01K 29/005; G06T 2207/30188**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Digitanimal, S.L.**
**28830 San Fernando de Henares, Madrid (ES)**

(72) Inventor: **Callejero Andrés, Carlos**
**28850 Torrejón de Ardoz, Madrid (ES)**

(74) Representative: **Balder IP Law, S.L.**
**Paseo de la Castellana 93**
**5ª planta**
**28046 Madrid (ES)**

(54) **CHARACTERIZATION OF PASTURE FOR IMPROVED AND SUSTAINABLE GRAZING AND FEEDING MANAGEMENT OF LIVESTOCK**

(57) A method comprising: digitally processing a plurality of aerial images of a terrain, each aerial image of the plurality showing a portion of the terrain; digitally partitioning the portion of the terrain into a plurality of paddocks; digitally processing animal data, the animal data at least comprising: geolocation data of at least one animal of a herd obtained at least during grazing of the at least one animal somewhere on the portion of the terrain, identification of an animal type of each animal of the herd at least during grazing of the at least one animal, and a number of animals in the herd at least during grazing of the at least one animal; and digitally estimating, based on both the digital processing of the aerial images and the animal data, quantity and, optionally, quality of the pasture in each paddock of the plurality of paddocks.

EP 4 245 133 A1

Description

TECHNICAL FIELD

The present disclosure relates to the field of animal grazing and feeding. More particularly, the present disclosure relates to digital classification of pastures and provision of grazing and feeding plans for animals based on the classified pastures.

BACKGROUND

Many animals, especially ruminants, are fed by means of grazing. The animals move in herds across pastures to eat grass and forage, that is to say, pastures. Grazing can be cost-effective because the animals eat the grass that grows on the pastures, which at the same time can be beneficious for the environment because in the case of a fire, the fire does not spread easily or quickly owing to a less reduced amount of green biomass The massive increase in livestock ranching exploitations has reduced the amount of pastured-based farming conducted in many countries, which has diminished the quality with which the animals are fed as the food provided to them is intended to make them grow more rapidly, thereby diminishing the health of the animals. In this sense, smaller exploitations relying on grazing adequately feed the animals and, furthermore, the exploitations are typically more resilient than others involving other feeding techniques. Consumers also prefer to consume food products from animals that are healthier and are subject to higher welfare standards.

Ranchers and farmers that make their animals graze have to decide where to carry the animals so that they may be properly fed whilst not damaging the pastures themselves. That is to say, the pastures where the animals eat should not be overgrazed, otherwise the pastures will take much more time to grow and the pasture will not be usable by animals during a longer period of time. Accordingly, the ranchers and farmers should find out which pastures are available for animal grazing and to what grazing level so that they can decide whether the animals are moved to one pasture or another and let all the other pastures recover from the animal activity and, thus, pastures can grow to provide more feed and/or feed of greater quality in less time.

The documents Kearney, Sean P., Porensky, Lauren M., Augustine, David J., Derner, Justin D., and Gao, Feng. 2022. "Predicting Spatial-Temporal Patterns of Diet Quality and Large Herbivore Performance Using Satellite Time Series." Ecological Applications, studies the relationship between diet quality of animals and pasture and forage of existing pastures to determine which pasture or forage is best for the animals. More particularly, the document investigates how spatial-temporal fluctuations in forage biomass and quality influence animal performance and targets to inform managers about the stocking rate and paddock selection. A model predicts grazing season mass gains, across 40 different paddocks grazed over a 10-year period, finding strong relationships between diet quality and the satellite-derived phenological metrics, especially metrics related to the timing and rate of green-up and senescence.

Other studies are those of documents Jansen VS, Kolden CA, Schmalz HJ. "The Development of Near Real-Time Biomass and Cover Estimates for Adaptive Rangeland Management Using Landsat 7 and Landsat 8 Surface Reflectance Products". Remote Sensing. 2018; 10(7):1057 and Pullanagari RR, Kereszturi G, Yule I. "Integrating Airborne Hyperspectral, Topographic, and Soil Data for Estimating Pasture Quality Using Recursive Feature Elimination with Random Forest Regression". Remote Sensing. 2018; 10(7):1117, which describe ways for assessing pasture quality and quantity from aerial images.

Although the above documents have made some progress in the study of pastures and animal diet, the state of the art does not provide all the tools necessary to address the limitations that ranchers and farmers encounter for managing the pasturing of livestock. Accordingly, there is an interest in being capable of estimating pasture availability on a terrain based on aerial images thereof so that improved grazing plans can be established for an adequate feeding of animals like e.g. free-range cattle or livestock, and, at the same time, the pastures are not overgrazed and are preferably not undergrazed, thereby making possible to better use the available biomass and let it regenerate and grow more efficiently. The present disclosure intends to provide methods, devices, and systems for achieving one or more of these goals. Furthermore, at least part of the techniques and conclusions described in the aforesaid documents can optionally be used in the methods, devices and systems of the present disclosure for possibly better results.

SUMMARY

A first aspect of the disclosure relates to a method comprising:

digitally processing a plurality of aerial images of a terrain comprising pastures, each aerial image of the plurality showing a portion of the terrain;
digitally partitioning the portion of the terrain into a plurality of paddocks (or plots);

digitally processing animal data, the animal data at least comprising: geolocation data of at least one animal of a herd obtained at least during grazing of the at least one animal somewhere on the portion of the terrain, identification of an animal type of each animal of the herd at least during grazing of the at least one animal, and a number of animals in the herd at least during grazing of the at least one animal; and

digitally estimating, based on both the digital processing of the aerial images and the animal data, quantity and, optionally, quality of the pasture in each paddock of the plurality of paddocks.

The method provides an estimation of the quantity and/or quality of pasture of a terrain.

Animal grazing can be improved with said estimation owing to the knowledge of where more and/or better pasture is in the portion of the terrain and where less and/or worse pasture is in the portion of the terrain. Accordingly, the herd can be made to graze in the pasture or pastures where there is more and/or better grass and forage so that the animals can be adequately fed.

The partitioning of the portion of the terrain can be in equally- or differently- shaped and/or dimensioned paddocks (or plots), although it is preferred to use paddocks with same shape and dimensions for a simpler partitioning, and preferably with regularly-shaped paddocks, e.g. squares, rectangles, hexagons, etc. In this sense, the size or at least a minimum size of the paddocks is preferably made dependent upon a spatial resolution of the aerial images and/or precision in the geolocation data (or a geolocation sensor providing the geolocation data, if known); with worse spatial resolution and/or precision, the minimum size is preferably made bigger.

The digital estimation of the quantity and/or quality of the pastures in the different paddocks is based on at least two factors.

On the one hand, the information about any of both pasture parameters that can be retrieved from the aerial images themselves since vegetation and, sometimes, soil and/or the slope of the terrain can be assessed from the data captured in the aerial images in one or more light frequency channels (e.g. visible channel, infrared channel, etc.), and sometimes even with radar and/or lidar surveying techniques. For example, the greenness of the terrain and the different shades of green can be assessed in the visible channel to estimate how good or significant the pasture is. The digital processing of the aerial images is conducted to this end, hence depending on the type of aerial images, different characteristics of the images will be considered for the digital estimation. It is noted that for a more accurate estimation, multiple digital processing can be conducted for a same portion of the terrain, including the digital processing of different types of aerial images for the same portion (e.g. in the visible channel, radar, etc.). Different techniques can be used in the image processing for making the estimation as known in the art; by way of example, any one of the techniques described in the papers cited in the background section can be used, but as it will be readily apparent to the person skilled in the art other technique or techniques could be used instead without departing from the scope of the present disclosure. The technique or techniques could result in the retrieval of vegetation index or indices for characterization of the vegetation in the portion of the terrain to be characterized; for example, one or more of the following indices known in the art could be retrieved: NVDI, EVI, SAVI, SIPI, and GCI. Some exemplary techniques using these indices will be explained later on.

On the other hand, the animal data are also representative of the quantity and/or quality of the pasture. Animals in herds staying in a given pasture for a longer period of time is indicative of a greater quantity and/or quality of pasture availability, and depending on the type of the animals and the number of animals in the herd, any of these pasture parameters will be greater or smaller. In this sense, the geolocation data can be associated with one or more paddocks resulting from the partitioning, and the time spent by the at least one animal (or each animal of the herd that is geolocated) according to the geolocation data are taken into account in the estimation. The type of animal can be associated with greater or lower ingestion quantities or rates of the animals, and the number of animals in the herd will increase the multiplication factor of said ingestion quantities or rates.

It has been found out that by using positioning heatmaps rather than just the geolocation data itself, the estimation made tends to be more accurate. This is so because heatmaps numerically quantify the amount of time that some target has been at each particular position, and may also interpolate the amount of time that the target might have been between each pair of measured positions in case the geolocation data provides intermittent positioning data about the respective animal. Accordingly, in some embodiments, the method further comprises digitally converting the geolocation data of the at least one animal into a positioning heatmap thereof in the animal data. There are different techniques known in the art for converting geolocation data into a positioning heatmap.

With both streams of data for the estimation of the pasture in the paddocks, a paddock not visited by the herd according to the geolocation data thereof will not automatically be estimated as not having grass or forage, or as having grass of forage of low quality. The processing of the aerial images will result in an estimation of the quantity and/or quality of the pasture too.

The method can be a computer-implemented method run in one or more computing apparatuses. Each digital step can be conducted by a single computing apparatus or be distributed among a plurality of computing apparatuses performing distributed processing.

In some embodiments, the step of digitally processing the plurality of aerial images further comprises clustering of the portion of the terrain into parcels based on similarity of the parcels.

The resulting clusters can be used during the estimation since they identify parcels with pastures of similar characteristics.

The clustering performed can be, for example, image segmentation whereby an unsupervised learning model conducts the clustering without requiring the labelling of the different types of parcels.

In some embodiments, the method further comprising digitally causing to provide user perceptible signals representative of the digital estimation.

For example, the portion of the terrain can be represented on a screen by way of the aerial images, and the estimation of the quantity and/or quality of the grazing superimposed on the terrain showing likewise the paddocks that the portion of the terrain has been partitioned into. The geolocation data, or heatmap if the geolocation data has been converted into it, may also be superimposed in the representation of the digital estimation.

In some embodiments, the digital processing of the plurality of aerial images includes detecting non-pasture areas, such as one or more of: buildings, trees, rocks, sloped terrain, and roads.

The detected non-pasture areas are then used to adjust or disregard, during the processing of the animal data, possible erroneous locations present in the geolocation data (i.e. the geolocation data indicating that the respective animal is at or within a non-pasture area) so that the subsequent estimation is more accurate.

In some embodiments, the digital estimation of the quantity and, optionally, the quality of the pasture in each paddock is made with a digital estimation algorithm that takes the animal data and the digital processing of the aerial images as inputs. Further, the method also comprises: digitally training the digital estimation algorithm, with the plurality of aerial images comprising, at least during the training, aerial images of the portion of the terrain before, during and after the grazing of the at least one animal. The aerial images before and after the grazing are taken not exceeding more than a predetermined period of time since the at least one animal started grazing and the at least one animal stopped grazing, respectively.

The evolution of the paddocks according to the aerial images before, during and after the grazing of the animals are considered during the training of the algorithm for estimating one or both parameters of the pastures.

It can be appreciated that a paddock that before the grazing of the animals can be characterized as having pasture of some quantity and/or quality based on the aerial image(s), has indeed that pasture if the herd grazes that paddock and afterwards the aerial images reveal that the amount and/or quality of the pastures has diminished. Aerial images taken during the grazing period are also useful for assessing how the different paddocks or parcels evolve over time while the animals are present.

The aerial image(s) before and after the grazing should be taken no more than a predetermined period of time prior to the grazing, nor a predetermined period of time after the grazing. The predetermined period of time is e.g. 3 days, 7 days, 14 days or more. In both cases, it is preferrable to have the aerial image(s) taken as close to the dates of grazing as possible so as to assess the variations in pastures due to the grazing of the herd.

In some embodiments, the animal data further comprises one or both of: mass gain of at least one animal of the herd during the grazing somewhere on the portion of the terrain, and caloric expenditure of said at least one animal during the grazing somewhere on the portion of the terrain.

The increase in mass that the animal(s) experiences and the caloric expenditure are also representative of the quantity and/or quality of the pastures of the paddocks.

Lower mass gains mean that the animal(s) was unable to eat much grass or forage, either because the quantity was low or because it was not appealing to the animal(s), e.g. dry, old grass.

Greater caloric expenditures mean that the animal(s) had to travel long distances to find grass or forage that the animal(s) wanted to eat, which means that there is limited grass or grass of lower quality in some paddocks (particularly, those visited as indicated by the geolocation data).

In some embodiments, the method further comprises: after the step of digitally estimating, digitally calculating a stocking rate per pasture, wherein the stocking rate is a ratio between mass of pasture in the respective paddock and both the number of animals and a surface of the respective paddock; and digitally providing a grazing plan that orders at least some or all paddocks by stocking rate in descending order.

The stocking rate quantifies the stocking density, i.e. how many animals are per unit of paddock area. It can be quantified, for example, as amount in kilograms of dry matter (e.g. kg DM) per unit area (e.g. ha or hectare, $km^2$, etc.). By knowing the stocking rate, a grazing plan can be tailored to make an efficient use of the existing amount of pasture in each paddock. To that end, paddocks are preferably provided in the grazing plan, i.e. pasture plan, by stocking rate in ascending order.

It will be noted that the stocking rate could be provided as the inverse ratio without departing from the scope of the disclosure, i.e. a ratio between both the number of animals and a surface of the respective paddock divided by mass of pasture in the respective pasture, in which case the paddocks are ordered in ascending order.

In some embodiments, the method further comprises digitally providing a grazing plan that at least avoids paddocks whose quantity of pasture is less than a predetermined threshold according to the digital estimation.

Paddocks with too low amounts of grazing are not included in a current grazing plan to let the grazing regenerate and/or grow, otherwise either the animals will not be adequately fed because there is no sufficient pasture, or will reduce the pasture to such levels that the regeneration and growing thereof will take more time and resources.

The predetermined threshold can be set according to experimental tests or algorithm calculations, and may be made dependent upon the number of animals, e.g. kilograms per animal, so when the herd has few animals a paddock can be deemed suitable for grazing because the quantity of pasture is not so low for a herd of such dimensions, but unsuitable when the herd has too many animals.

In some embodiments, the method further comprises digitally estimating, for one, some or each paddock of the plurality of paddocks and based on a set of data, whether quantity of the pasture will be less than the predetermined threshold if the herd is allowed to graze in the respective paddock. The set of data at least comprises: the number of animals and the animal type in the animal data, and the digital estimation of quantity in each paddock of the plurality of paddocks. And the grazing plan digitally provided further avoids pastures that will have pasture below the predetermined threshold if animal grazing is allowed according to the digital estimation.

With the estimated quantity of pasture in the paddocks, and the size of the herd (number of animals), the animal intake rate, namely the quantity of pasture that could be eaten by the herd, can also be estimated. To this end, the animal type can be associated with a typical diet or amount of food to be ingested by the animals of the herd, so a ratio of amount of pasture to be eat by the herd per unit of time can be calculated.

The grazing plan can have a duration of grazing associated therewith as well. So, by knowing how long will the grazing take, how much food intake the herd has, and the quantity of pasture in each paddock, it can be established which paddocks are suitable for the grazing plan and which not. The paddocks are deemed suitable when, after letting the animals graze for a period of time, the quantity of pasture is not expected to be below the predetermined threshold.

In some embodiments, the method further comprises: digitally determining, for one, some or each paddock of the plurality of paddocks and based on a set of data, when and/or for how long should the herd be allowed to graze in the respective paddock to one or both of:

- avoid that the quantity of the pasture will be less than the predetermined threshold if the herd is allowed to graze in the respective paddock more time than that determined; and
- make an average mass gain of each animal of the herd to be within a predetermined average gain range;

and digitally providing a grazing plan based on the determination made.

The set of data at least comprises: the number of animals and the animal type in the animal data, and the digital estimation of quantity of pasture in each paddock of the plurality of paddocks. The set of data preferably further comprises animal activity data, in turn comprising one or more of: time that the at least one animal rests per unit of time e.g. day, week, etc.; time that the at least one animal grazes per unit of time; time that the at least one animal ruminates per unit of time; quantity of liquid ingested by the at least one animal per unit of time; and distance traveled by the at least one animal per unit of time.

The grazing plan can be digitally provided such that it provides the amount of time or the specific start and stop times that the herd is allowed to graze to achieve one or both of the aforesaid goals: avoid that the quantity of pasture in one or more paddocks does not go under the predetermined threshold according to the animal intake rate, and optimize the average mass gain of the animal based on the type of animal and the estimated quantity of pasture, but preferably also based on the activity of the animal.

Regarding the former, the grazing plan includes paddocks that have a quantity of pasture (according to the estimation) above the predetermined threshold, and indicates how much time the herd can graze therein so that the quantity of pasture does not go under the predetermined threshold according to the animal intake rate.

With regards to the optimization of the average mass gain of the animals, it is adequate for the animal to have an intake within a predetermined range with minimum and maximum values that are deemed to be a correct feeding per e.g. day.

The animal activity data can be provided by a wearable device attached to the animal(s) for monitoring its actions, e.g. by way of inertial measurement sensors. The activity of the animal(s) influences the adequate average mass gain and the times when the animal(s) is supposed to eat for a healthier condition. It is noted that the performance of animals in paddocks is strongly affected by the quality of the diet, which is related to the moment when the vegetation greens, so determining when to graze is convenient. In this sense, by determining the rate of greening of the pasture by processing the aerial images, it is possible to determine convenient or most optimal moments for the animals to graze, which would be made to coincide with high-quality forage.

Both quality and quantity of the pasture influence the activity of the animals like, for instance: the time the animal spends grazing, the time it spends ruminating, the time it spends resting, the distance traveled and the number of times a day that the animal drinks water and how much water it drinks.

Less time is spent grazing when forage is plentiful and quality is good; more time is spent grazing when quantity or quality is limited. Cattle spend more time grazing when stocking rates are high, pasture is short, or when the standing crop is made up of plant species that differ in the amount of leaf material produced. As shown by studies, heifers increased grazing time by an average of 3.5 hours per day as the amount of available forage decreased. In lightly grazed situations, grazing time was 8.9 hours on abundant mature growth and 13.9 on short new growth. In closely grazed situations, grazing time was 6.7 hours on short dry forage and 13.2 hours on short new forage.

When green material is present, grazing animals spend more time searching for it and stop grazing when mature forages become scarce. Livestock or ruminants generally graze from 7 to 12 hours a day. The daily grazing cycle tends to be very consistent. A typical daily cycle includes a major grazing period that starts around sunrise and generally lasts 3 to 5 hours, a second major grazing period in late afternoon that generally lasts 3 hours, and shorter and less regular grazing periods around midday and during the night. In pastures with uniform plant composition, day-to-day cattle movement is not by chance. Cattle rarely are observed in the same location for more than 2 consecutive days. In pastures where forage quantity and quality vary, observations indicate that cattle may not return to sites with low quality forage for as long as 21 consecutive days.

In some embodiments, the method further comprises: digitally providing a grazing plan that orders the paddocks according to the estimated quantity of pasture therein such that first paddocks are the paddocks with greater quantity of pasture and second paddocks are the paddocks with lower quantity of pasture. The first paddocks are to be grazed before the second paddocks.

The grazing plan orders the paddocks by quantity of pasture in descending order so as to make the paddocks with less pasture the ones with lowest preference. This way, not only the animals are able to be adequately fed thanks to more and, possibly, better pasture, but also the paddocks with less pasture are given more time to grow the pasture.

In some embodiments, the method further comprises: digitally providing a set of data by processing data indicative of one or more of: rainfall on an area of the terrain, temperature on the area of the terrain, current and/or future season of the year, and historic evolution of the changes in quantity and, optionally, quality of the pasture in previous years; and digitally estimating, for each paddock of the plurality of paddocks and based on the set of data, a growing rate at which the quantity and, optionally, the quality of the pasture will grow per unit of time if no animals graze in the respective paddock. In these cases: the first paddocks of the grazing plan are ordered by ascending value of growing rate such that paddocks with lower growing rate are placed first; and/or the second paddocks of the grazing plan are ordered by descending value of growing rate such that paddocks with greater growing rate are placed first.

Growing rates for the quantity and even quality of the pasture can be estimated per paddock and per unit of time. The growing rates, in turn, can be taken into account in the provision of grazing plans so that the biomass can regenerate and/or grow before the animals are allowed to graze therein again, which means that the paddocks with lower growing rates are preferably the ones that the animals are to graze in. In this manner, once the grazing in these paddocks ends, the paddocks start to regenerate and/or grow the biomass during the time the herd grazes in other paddocks with greater growing rates, namely paddocks that regenerate and/or grow the pasture more rapidly. This means that the herd can graze in these latter paddocks almost twice in a row if the former paddocks did not have enough time to let the pasture grow sufficiently owing to their lower growing rates.

In some embodiments, the method further comprises: digitally estimating, based on both the digital processing of the aerial images and the identification of the animal type and the number of animals in the animal data, an average mass gain of each animal of the herd if the herd is allowed to graze in one or more paddocks of the plurality of paddocks; and, when the average mass gain of at least some animals of the herd is below a predetermined average mass gain threshold, digitally providing a nutritional supplementation plan that compensates for a difference between the predetermined average mass gain threshold and the average mass gain.

The paddock(s) could be low on grass or forage, for example due to the season of the year, a fire, a flood, or the like that damages the pasture or makes access to certain paddocks not possible. In these scenarios, the animals cannot eat as they normally do and, hence, their average mass gain is less than if those conditions did not exist. The average mass gain can be estimated, and when it is below the predetermined average mass gain threshold, additional food should be provided to the animals to avoid starvation or malnutrition. The nutritional supplementation plan at least includes a quantity of mass of food that the animals should eat, and may even be broken down by type of food and mass thereof based on the diet that the animal type is expected to have.

Maintenance energy expenditure is defined as the amount of energy needed to maintain energy balance without forming a product. $ME = RE + HE$, where ME is metabolizable energy, RE is energy retained in the body or product, and HE is heat energy produced by the animal. Energy expenditure for the physical activity of grazing is likely influenced by numerous factors, including forage quality and availability, topography, weather, water distribution, genotype, and, of course, interactions among these factors. The CSIRO (1990) estimated maintenance energy requirements of grazing cattle to be 10 to 20% greater in good grazing conditions and 50% greater for extensive grazing conditions than pen fed cattle.

The predetermined average mass gain threshold can be set according to experimental tests or algorithm calculations; in some cases, the threshold is set according to average mass gains of preceding years or from animals of the same type whose average mass gain has been measured. Calves on good pastures fattening a typical value between 1.0 Kg and 1.2 Kg have a conversion rate that worsens as the fattening days increase in a relationship that is usually linear:

$$CI = 0.001x + 6$$

where x is the number of days grazing.

In some embodiments, the animal data further comprises mass of the at least one animal of the herd before and after the grazing.

The mass of the at least one animal (or some or all animals of the herd) can also be used for estimating the quantity and/or quality of the pasture of the paddocks. The mass of the animal(s) is also useful in the training of the algorithm. And in those embodiments in which grazing plans are provided, the mass of the animals can also be taken into account for deciding which paddocks are to be provided in the plan and in which order.

In some embodiments, the method further comprises weighing the at least one animal of the herd before and after the grazing to provide mass in the animal data.

In some embodiments, the method further comprises attaching a wearable device to the at least one animal of the herd to provide the geolocation data in the animal data. In some embodiments, the wearable device includes one or more inertial measurement sensors.

The wearable device can be a collar or any other wearable device for livestock, and includes at least one means or module for geolocating the wearable device, for example based on GNSS (e.g. GPS, Glonass, Galileo, etc.), triangulation by cellular base stations, etc.

The wearable device, which comprises at least one processing device, may process the location data provided by the positioning module and adjust it before transmitting it to a communication network for further processing to carry out a process as described, or even discard it if it determines that the location data may be wrong. To this end, the processing might include a comparison between the current positioning coordinates provided by the positioning module and a positioning reference like e.g. a running average calculated from former positioning coordinates. When the difference between the two values is greater than a predetermined threshold and/or when a confidence in positioning coordinates is low, the current coordinates are discarded, otherwise it is kept in a memory of the device. When the geolocation device includes inertial measuring sensors, the current positioning coordinates may be adjusted based on the measurements of these sensors.

The wearable device includes a wireless communications module configured to at least transmit geolocation data, for example to a cellular communications network, to a remote electronic device in turn communicating with the network, etc.

In some embodiments, the method further includes grazing the herd according to the grazing plan.

A second aspect of the disclosure relates to a data processing apparatus or system comprising means for carrying out the steps of a method according to the first aspect.

A third aspect of the disclosure relates to a system comprising: a data processing apparatus or system according to the second aspect; and one or more wearable devices adapted to be worn by livestock or a ruminant, each wearable device comprising means for geolocating the wearable device and a wireless communications module configured to at least transmit geolocation data, and preferably at least one inertial measurement sensor.

A fourth aspect of the disclosure relates to a computer program product that has instructions which, when executed by a computing apparatus or system, cause the computing apparatus or system to perform a method according to the first aspect of the disclosure.

In some embodiments, the computer program product is embodied on a non-transitory computer readable medium.

A fifth aspect of the disclosure of the invention relates to a data carrier signal carrying a computer program product according to the fourth aspect of the invention.

## BRIEF DESCRIPTION OF THE DRAWINGS

To complete the description and in order to provide for a better understanding of the disclosure, a set of drawings is provided. Said drawings form an integral part of the description and illustrate embodiments of the disclosure, which should not be interpreted as restricting the scope of the disclosure, but just as examples of how the disclosure can be carried out. The drawings comprise the following figures:

Figures 1-2 and 5 diagrammatically show parts of methods in accordance with some embodiments.

Figure 3 diagrammatically shows a heatmap.

Figure 4 diagrammatically shows partitioning of a portion of a terrain into paddocks or plots with a method in accordance with some embodiments.

## DETAILED DESCRIPTION

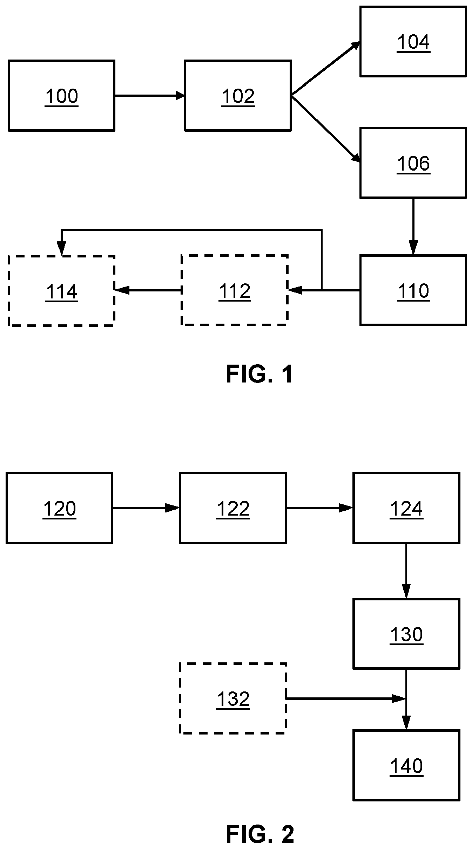

Figure 1 diagrammatically shows part of a method in accordance with some particular embodiments.

Animals of a herd can have their movements tracked for monitoring thereof and for understanding of their behavior. Since the animals of a herd normally moves in group, in many occasions only one or some animals in the hard have their movements tracked.

The movement tracking is conducted, in some examples, with a wearable device arranged on the respective animal and which includes a module or means for geopositioning the device.

The method includes a step 100 whereby the module or means provide location coordinates, either intermittently or continuously or almost continuously, for instance by way of satellite signals, namely GNSS.

The method also includes a step 102 whereby the location coordinates provided are processed for validation, correction or deletion thereof. The validation process can rely on e.g. previously provided location coordinates, measurements of other sensors, etc.

Location coordinates that are not validated and, optionally, cannot be corrected in some way so that the location they indicate is substantially close to the actual location of the animal, e.g. no more than 100 meters of distance, 50 meters of distance, etc., are deleted 104, whereas those validated and/or corrected are registered 106 and wirelessly transmitted to a remote electronic device or communications network for further processing. Prior to the transmission, the data are preferably compressed.

The method also includes a step 110 whereby the remote electronic device or a computing apparatus or system, e.g. servers on the cloud, processes the received geolocation data of, preferably, all the animals of the herd that are tracked with wearable devices. This geolocation data can be integrated in animal data for processing.

In some cases, as illustrated with dashed blocks, the electronic device, computing apparatus or system further processes the geolocation data to correct 112 the geolocation data, if possible and necessary, and/or convert the geolocation data (either as processed in step 110 or as corrected 112) into heatmaps 114. The correction 112 of the geolocation data may involve establishing whether the location coordinates correspond to a non-pasture area such as a building, sloped terrain, rocks, etc., where an animal is not expected to be at, in which case the location coordinates can be moved to the nearest position that an animal could be, or the respective location coordinates be discarded. When any one of this additional processing 112, 114, the geolocation data of the animal data preferably take the additionally processed data.

Figure 2 diagrammatically shows part of a method in accordance with some particular embodiments.

In the methods of the present disclosure, aerial images are to be processed for estimating the quantity and/or quality of pasture in different parts of a portion of a terrain so as to classify the portion as a set of paddocks or plots with pasture with some characteristics.

The aerial images are preferably taken from above the terrain, as vertically as possible, but it is not a requirement and perspective aerial images, for instance taken with a drone, are possible as well. The more vertically the image is taken, the easier and more accurate the image processing is.

The processing of the aerial images may involve a step 120 whereby the images are segmented to identify and categorize different areas within the terrain, like for instance: forests, pastures, rivers, buildings, roads, etc.

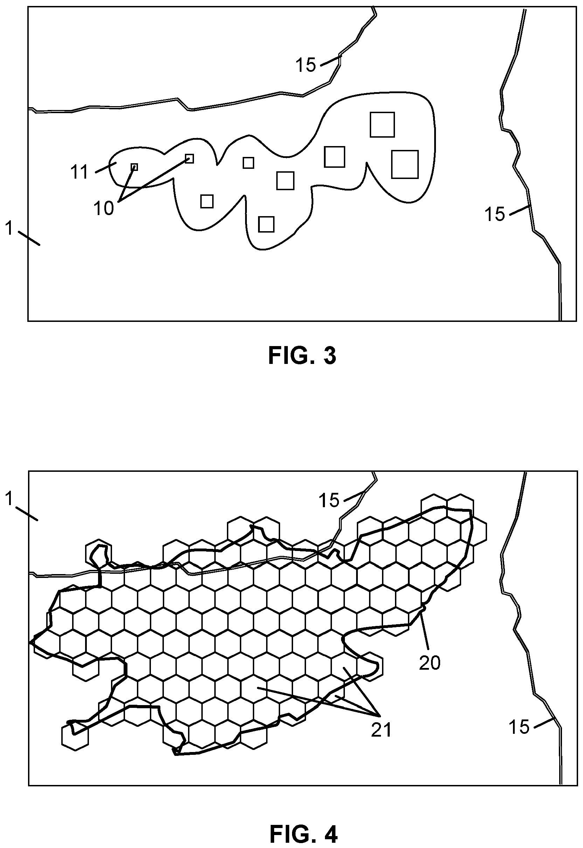

Further, the processing may involve a step 122 whereby at least a portion of the terrain is partitioned into paddocks based on geolocation data of animals like e.g. livestock. The paddocks are clusters in digital terms. When the geolocation data is in the form of heatmaps, the paddocks or clusters are usually provided more precisely. An example of paddocks or clusters is shown in Figure 4.

A temporal evolution of the geolocation data can be used in step 124 to provide data indicative of a degree of occupancy of animals in each of the paddocks, plots or clusters of step 122, along with an optional timestamp. The data can be provided in any form, including a map or overlay for a map showing the paddocks or clusters in color-coded manner for example, as in the example of Figure 4. The degree of occupancy preferably takes into account the number of animals in the herd as provided in the animal data, thereby increasing the degree of occupancy when more animals are in the herd.

The aerial images are processed, one or several times depending on the technology used for taking the aerial images and e.g. the channels used, to characterize 130 the pasture in the paddocks or clusters. To this end, vegetation indices can be retrieved for the characterization. For a more precise characterization of the pasture, the aerial images are preferably at least from before the herd has grazed therein and after the herd has grazed therein. One or several of the following techniques can be used for the characterization 130 even though, as it is apparent for the person skilled in the art, other technique or techniques could be used as well.

Aboveground net primary production (ANPP), which is the amount of dry matter (DM) produced per-unit area during a period of time, can be estimated. ANPP can be determined by the amount of photosynthetically active radiation absorbed (APAR) by the canopy in that period, and the efficiency with which that energy is transformed in above-ground dry matter (radiation use efficiency, RUE):

$$ANPP\left(\frac{kg\frac{DM}{ha}}{month}\right) = APAR\left(\frac{\frac{MJ}{ha}}{month}\right) \times RUE\left(\frac{kgDM}{MJ}\right)$$

where *MJ* stands for Megajoule, *ha* stands for hectare. Although in the above formula these units have been used, together with a period of time of months, it will be noted that different units could be used without departing from the scope of the present disclosure.

RUE is an important quantifier of crop production in relation to photosynthesis, as it combines both the amount of solar radiation captured by the crop and the efficiency of the crop to produce dry matter. Measurements of RUE determined for a range of crops and different management systems involve the collection of dry biomass, grain yield or carbon assimilated, and the accumulation of intercepted PAR by the canopy over the life cycle of the crop. RUE's values for different crops and plants can be found in the literature. For instance, Alfalfa 0.002 kg/MJ for 15 cm spacing to 0.0016 kg/MJ for 30 cm spacing, as described for example in Mattera et al., "Yield components, light interception and radiation use efficiency of lucerne (Medicago sativa L.) in response to row spacing," European Journal of Agronomy, vol. 45, 2013.

APAR is the product of incoming photosynthetically active radiation (*PAR*) and the fraction absorbed by the canopy (*fPAR*) in that period of time.

Photosynthetically Active Radiation (*PAR*) represents the radiation flux at wavelengths between e.g. 400-700 nm, and it can be measured by sensors located for instance in a portable meteorological station or in a wearable device mounted on the animal.

$$APAR = PAR \times fPAR$$

In order to monitor *fPAR* with acceptable temporal and spatial resolution at the paddock level, the stored information from the geolocation data or heatmaps is utilized, and *fPAR* can be estimated as a non-linear function of MODIS NDVI. The relation between NDVI and *fPAR* with geolocation data assigning no absorption (*fPAR* = 0) to NDVI values corresponding to pixels outside the perimeter that contains the geolocation data or heatmap produced by the previously validated points, and maximum *fPAR* (*fPAR* = 0.950 - 0.99) to NDVI values corresponding to pixels with high amount of green biomass.

$$fPAR = min[(\rho red - \rho nir)/SRmax - SRmin) - SRmin/(SRmax - SRmin), fPARmax]$$

Where $\rho red$ is the red surface reflectance and $\rho nir$ is the near infra-red surface reflectance; *SRmin* and *SRmax* are the minimum and maximum values, respectively, of the simple ratio, SR, index *SR* = (1 + *NDVI*)/ (1 - *NDVI*); and *fPARmax* is the maximum *fPAR*.

Approaches for relating NDVI to ANPP typically rely on a season-long integration of NDVI values from frequently repeated measurements of a location over time (iNDVI), NDVI was converted to an estimate of APAR and relationships between ANPP and integrated APAR (iAPAR) were examined both in terms of spatial variation within a year, and temporal variation among years.

NDVI can be used to check the presence and condition of grass in their pastures. However, in areas where forage grasses are hidden under a dense canopy of trees and/or shrubs (for example, in tropical forests), it might not be a reliable measure of grass abundance.

SAGA (System for Automated Geoscientific Analyses) is an Open Source GIS software used for editing spatial data.

The calculation of the NDVI is done using the following formula:

$$NDVI = \rho red - \rho nir/(\rho red + \rho nir)$$

where $\rho nir$ and $\rho red$ are the atmospherically corrected surface reflectance values of the NIR (near infra-red) and red bands.

The Enhanced Vegetation Index (EVI) tries to express the atmospheric effects by calculating the radiance difference between the Blue and Red bands and allows to monitor the state of the vegetation in case of high biomass densities.

$$EVI = G \frac{NIR - Red}{(NIR + C1 \times Red - C2 \times Blue + L)}$$

where NIR/red/blue are the Near IR, red and blue surface reflectances; G is a gain factor; L is the canopy background adjustment that addresses non-linear, differential NIR and red radiant transfer through a canopy, and C1, C2 are the coefficients of the aerosol resistance term, which uses the blue band to correct for aerosol influences in the red band. The coefficients adopted in the MODIS-EVI algorithm are: L = 1, C1 = 6, C2 = 7.5, and $G$ = 2.5; notwithstanding other coefficients are possible as well.

The SAVI or Ground Adjusted Vegetation Index can minimize the influences of ground brightness. It includes a soil adjustment factor L to the NDVI equation to correct for the effects of soil noise (soil color, soil moisture, soil variability across the region, etc.), which tend to affect the results.

The calculation formula is as follows:

$$SAVI = \left( \frac{\rho nir - \rho red}{\rho nir + \rho red + K} \right) (1 + K)$$

where K is a correction factor which ranges from 0 for very high vegetation cover to 1 for very low vegetation cover. The most typically used value is 0.5 which is for intermediate vegetation cover.

In Remote Sensing, the Green Chlorophyll Index (GCI) is used to estimate the chlorophyll content of leaves in various plant species. The chlorophyll content reflects the physiological state of the vegetation, and it decreases in stressed plants. Therefore, GCI can be used as an assessor of plant vigor.

Structure Insensitive Pigmentation Index (SIPI) provides an accurate analysis of vegetation with variable canopy structure. SIPI estimates the ratio of carotenoids to chlorophyll: the highest value signals from stressed vegetation. The calculation formula is as follows:

$$SIPI = \frac{NIR - Blue}{NIR - Red}$$

Although a great variety of vegetation indices (VI's) are widely used to estimate various vegetation properties from reflected light, their potential is limited in the quantification of biochemicals under heterogeneous grassland systems. Compared to the full spectrum-based models, the performance of models based on VI's is typically inconsistent due to different canopy characteristics.

Full range hyperspectral sensors utilize narrow spectral measurements of reflected light, which are capable of detecting strong narrow absorptions features caused by chemical bonds present in biochemicals of interest such as nitrogen, phosphorus, fiber, polyphenols, and cellulose. It has showed to be a powerful tool to quantify biomass and dead vegetation fraction.

Satellite-derived phenological metrics to estimate ANPP daily mass gains of extensive grazing cattle can be developed using temporal (daily or weekly) mass gain measurements using a scale at the entrance of the paddock.

It is also possible to make an estimation of the amount of dry matter in a portion of the terrain based on the changes in weight experienced by the animals while grazing in the pastures. The following formula can be used to that end:

$$DMt = n \times CI \times \sum_{i=1}^{i=t} ADLWi$$

where $DMt$ is Total Dry Matter; $n$ is the amount of time that the animals are grazing, e.g. the number of days that the animals have been grazing; $ADLW$ is the Average Daily Life Weight of each animal, with index $i$ ranging from 1 to t, with $t$ being the total number of animals grazing; and $CI$ is a Conversion Index that can be set e.g. by way of tests, which for instance in extensive systems might take a value of 7 or more, e.g. 10, 15, etc.

The above provide estimations that are more accurate when the season of the year is taken into account, along with other parameters like the type of plant and the regional peculiarities, that way NDVI values are interpreted more accurately. NDVI values obtained with high temporal resolution satellite data (for example, MODIS) have a strong relationship with the phenological phases of crops (emergence, maturity, harvest). However, there are certain limitations. For example, during the early stages of crop growth, when green leaf area is small, NDVI results are sensitive to background soil effects. NDVI can also become saturated at later stages, when crops reach the maximum level of vegetation cover, and produce inaccurate results.

The characterization 130 is then used to estimate 140 the quantity and/or quality of the pasture within the different paddocks.

The estimation 140 can also use additional data 132 (shown with dashed blocks for the sake of clarity only), for example one or more of: the value *of DMt* resulting from the above equation by considering the mass of the animals in the herd when the mass is known (if the animals are weighed on scales before and after the grazing), the caloric expenditure when known (with the wearable device) or predicted, the distance that the animals move, the amount of time that the animals graze when known (with the wearable device or manually introduced by a rancher or farmer), etc.

Figure 3 diagrammatically shows an aerial image of a terrain 1, which includes two roads 15, and where it is represented a plurality of location coordinates 10 of an animal of a herd and a heatmap 11 resulting therefrom.

The location coordinates 10 can be obtained by means of a wearable device attached to the animal, e.g. a collar, an eartag, etc., that includes means for geolocating the device. The location coordinates 10 are shown with square indicators and are represented increasing in the size to illustrate the time evolution: a more recent location coordinate 10 is represented with a bigger indicator.

In some embodiments, the location coordinates 10 can be processed altogether with a technique as known in the art to convert the coordinates 10 into a heatmap 11.

Figure 4 diagrammatically shows partitioning of a portion 20 of the terrain 1 illustrated in Figure 3 into paddocks 21 with a method in accordance with some embodiments.

In this example, only a predetermined portion 20 is to be partitioned into paddocks 21. A reason for the existence of the portion 20 can be because that portion 20 belongs to a given rancher or farmer, because the land registry shows that only that portion 20 corresponds to pastures, or a different reason. In other examples, the entire terrain 1 of the aerial images is partitioned into paddocks 21.

The paddocks 21, which are clusters, are hexagons in this example, and all the hexagons are of same size. Regular and equally-sized partitioning reduces the computational burden and eases the comparison between grazing estimations of different paddocks 21.

The processing of the aerial images, for instance but not necessarily in the form described with reference to Figure 2, provides the paddocks 21 and associates the estimation of the quantity and/or quality of the pasture therewith. When represented on a map, like in this example, the estimation can be provided in color-coded form, numerically, or the like.

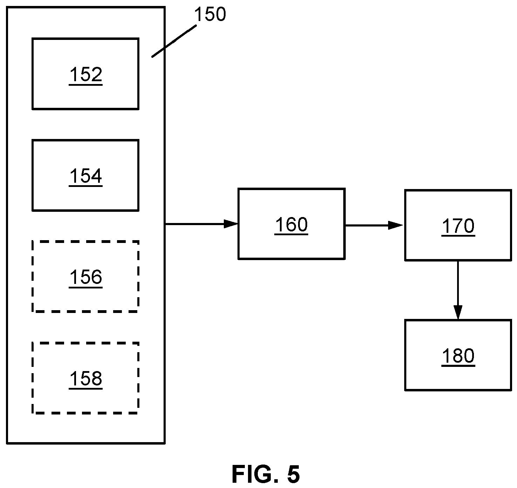

Figure 5 diagrammatically shows part of a method in accordance with some particular embodiments.

A series of data 150 is processed to provide an estimation 160 of the quality and/or quantity of pasture of at least a portion of the terrain in the form of paddocks. The series of data 150 includes a plurality of aerial images 152 of a portion of a terrain, geolocation data 154, either in raw form or as heatmaps, and optionally and preferably additional data 156, 158, shown with dashed blocks for the sake of clarity only.

The additional data 156, 158 can be one or more of: land registry of parcels of the terrain, which is provided by an entity like a govern for instance, orography of the terrain, rainfall on an area of the terrain, and temperature on the area of the terrain.

With the estimation 160, a grazing plan can be provided 170 indicating in which paddock or paddocks the herd shall graze in, and preferably when or for how long. Further, in some embodiments, the average mass gain of the animals of the herd is estimated, and when the value is below a predetermined threshold, preferably a nutritional supplemental plan is provided 180 for adequate feeding of the animals.

In this text, the term "includes" and its derivations (such as "including", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

**Claims**

**1.** A method comprising:

digitally processing a plurality of aerial images of a terrain (1), each aerial image of the plurality showing a portion (20) of the terrain (1);

digitally partitioning the portion (20) of the terrain (1) into a plurality of paddocks (21);

digitally processing animal data, the animal data at least comprising: geolocation data (10) of at least one animal of a herd obtained at least during grazing of the at least one animal somewhere on the portion (20) of the terrain (1), identification of an animal type of each animal of the herd at least during grazing of the at least one animal, and a number of animals in the herd at least during grazing of the at least one animal; and

digitally estimating, based on both the digital processing of the aerial images and the animal data, quantity and, optionally, quality of the pasture in each paddock of the plurality of paddocks.

2. The method of claim 1, wherein the digital estimation of the quantity and, optionally, the quality of the pasture in each paddock is made with a digital estimation algorithm that takes the animal data and the digital processing of the aerial images as inputs; and wherein the method further comprises: digitally training the digital estimation algorithm, with the plurality of aerial images comprising, at least during the training, aerial images of the portion of the terrain before, during and after the grazing of the at least one animal; wherein the aerial images before and after the grazing are taken not exceeding more than a predetermined period of time since the at least one animal started grazing and the at least one animal stopped grazing, respectively.

3. The method of any one of the preceding claims, wherein the animal data further comprises one or both of: mass gain of at least one animal of the herd during the grazing somewhere on the portion (20) of the terrain (1), and caloric expenditure of said at least one animal during the grazing somewhere on the portion (20) of the terrain (1).

4. The method of any one of the preceding claims, further comprising:

after the step of digitally estimating, digitally calculating a stocking rate per paddock, wherein the stocking rate is a ratio between mass of pasture in the respective paddock (21) and both the number of animals and a surface of the respective paddock (21); and

digitally providing a grazing plan that orders at least some or all paddocks (21) by stocking rate in descending order.

5. The method of any one of claims 1-3, further comprising digitally providing a grazing plan that at least avoids paddocks (21) whose quantity of pasture is less than a predetermined threshold according to the digital estimation.

6. The method of any one of claims 1-3, wherein the method further comprises:

digitally determining, for one, some or each paddock of the plurality of paddocks (21) and based on a set of data, when and/or for how long should the herd be allowed to graze in the respective paddock (21) to one or both of:

- avoid that the quantity of the pasture will be less than the predetermined threshold if the herd is allowed to graze in the respective paddock (21) more time than that determined; and
- make an average gain of mass of each animal of the herd to be within a predetermined average gain range; and

digitally providing a grazing plan based on the determination made;

wherein the set of data at least comprises: the number of animals and the animal type in the animal data, and the digital estimation of quantity of pasture in each paddock of the plurality of paddocks (21).

7. The method of claim 6, wherein the set of data further comprises animal activity data, the animal activity data comprising one or more of: time that the at least one animal rests per unit of time; time that the at least one animal grazes per unit of time; time that the at least one animal ruminates per unit of time; quantity of liquid ingested by the at least one animal per unit of time; and distance traveled by the at least one animal per unit of time.

8. The method of any one of claims 1-3, further comprising digitally providing a grazng plan that orders the paddocks (21) according to the estimated quantity of pasture therein such that first paddocks are the paddocks (21) with greater quantity of pasture and second paddocks are the paddocks (21) with lower quantity of pasture; wherein the first paddocks are to be grazed before the second paddocks.

9. The method of claim 8, further comprising:

digitally processing data indicative of one or more of: rainfall on an area of the terrain, temperature on the area of the terrain, current and/or future season of the year, and historic evolution of the changes in quantity and, optionally, quality of the pasture in previous years; and
digitally estimating, for each paddock of the plurality of paddocks (21) and based on the set of data, a growing rate at which the quantity and, optionally, the quality of the pasture will grow per unit of time if no animals graze in the respective paddock (21);
wherein:

the first paddocks of the grazing plan are ordered by ascending value of growing rate such that paddocks with lower growing rate are placed first; and/or
the second paddocks of the grazing plan are ordered by descending value of growing rate such that paddocks with greater growing rate are placed first.

10. The method of any one of the preceding claims, wherein the step of digitally processing the plurality of aerial images further comprises clustering of the portion of the terrain into parcels based on similarity of the parcels.

11. The method of any one of the preceding claims, further comprising digitally processing data indicative of one or more of: land registry of parcels of the terrain, orography of the terrain, rainfall on an area of the terrain and temperature on the area of the terrain; wherein the partitioning of the terrain into the different paddocks (21) is further based on the digitally processed data.

12. The method of any one of the preceding claims, digitally estimating, based on both the digital processing of the aerial images and the identification of the animal type and the number of animals in the animal data, an average mass gain of each animal of the herd if the herd is allowed to graze in one or more paddocks of the plurality of paddocks (21); and, when the average mass gain of at least some animals of the herd is below a predetermined average mass gain threshold, digitally providing a nutritional supplementation plan that compensates for a difference between the predetermined average mass gain threshold and the average mass gain.

13. A data processing apparatus or system comprising means for carrying out the steps of the method of any one of the preceding claims.

14. A system comprising:

data processing apparatus or system according to claim 13; and
one or more wearable devices adapted to be worn by livestock or a ruminant, each wearable device comprising means for geolocating the wearable device and a wireless communications module configured to at least transmit geolocation data.

15. A computer program product comprising instructions which, when the program is executed by a computer or a plurality of computers, cause the computer or plurality of computers to carry out the steps of the method of any one of the preceding claims.

**FIG. 1**

**FIG. 2**

**FIG. 3**

**FIG. 4**

**FIG. 5**

**EP 4 245 133 A1**

Europäisches
Patentamt
European
Patent Office
Office européen
des brevets

# EUROPEAN SEARCH REPORT

Application Number

EP 22 38 2251

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2019/078733 A1 (FARMSHOTS LLC [US]; LIVESTOCK IMPROVEMENT CORPORATION LTD [NZ]) 25 April 2019 (2019-04-25) | 1,5, 13-15 | INV. A01K29/00 |
| Y | * Paragraph [0004, 0032, 0036-0039, 0043, 0045, 0072, 0090, 0094, 0099, 0100]; claims 1-2, 22-26; figures 1, 3a-9b * | 2-4,6-12 | |
| Y | US 2020/193589 A1 (PESHLOV BOYAN [US] ET AL) 18 June 2020 (2020-06-18) * [0052, 0070, 0094, 0101, 0111, 0133, 0169, 0177-0222] * | 2,7,9,11 | |
| Y | WO 2017/134909 A1 (SONY CORP [JP]) 10 August 2017 (2017-08-10) * [0061, 0068-0069, 0075, 0094, 0099, 0105]; page 21 * | 3,6,12 | |
| Y | CN 110 647 786 A (INST GEOGRAPHIC SCIENCES & NATURAL RESOURCES RES CAS ET AL.) 3 January 2020 (2020-01-03) * [0105]; claim 1 * | 4,8 | TECHNICAL FIELDS SEARCHED (IPC) G06T A01K A01B |
| Y | NZ 247 379 A (WIER JAN HENRY) 29 September 1999 (1999-09-29) * page 6, line 3 * | 10 | |

The present search report has been drawn up for all claims

| Place of search | Date of completion of the search | Examiner |
|---|---|---|
| The Hague | 3 August 2022 | Steinbock, Lorenz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

17

## ANNEX TO THE EUROPEAN SEARCH REPORT
## ON EUROPEAN PATENT APPLICATION NO.

EP 22 38 2251

This annex lists the patent family members relating to the patent documents cited in the above-mentioned European search report.
The members are as contained in the European Patent Office EDP file on
The European Patent Office is in no way liable for these particulars which are merely given for the purpose of information.

03-08-2022

| Patent document cited in search report | | Publication date | Patent family member(s) | Publication date |
|---|---|---|---|---|
| WO 2019078733 | A1 | 25-04-2019 | NONE | |
| US 2020193589 | A1 | 18-06-2020 | AR 117293 A1 | 28-07-2021 |
| | | | AU 2019398116 A1 | 08-07-2021 |
| | | | BR 112021009659 A2 | 17-08-2021 |
| | | | CA 3119812 A1 | 18-06-2020 |
| | | | CN 113167779 A | 23-07-2021 |
| | | | EP 3894851 A1 | 20-10-2021 |
| | | | JP 2022510487 A | 26-01-2022 |
| | | | US 2020193589 A1 | 18-06-2020 |
| | | | WO 2020123402 A1 | 18-06-2020 |
| WO 2017134909 | A1 | 10-08-2017 | NONE | |
| CN 110647786 | A | 03-01-2020 | NONE | |
| NZ 247379 | A | 29-09-1999 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **KEARNEY, SEAN P. ; PORENSKY, LAUREN M. ; AUGUSTINE, DAVID J. ; DERNER, JUSTIN D. ; GAO, FENG.** *Predicting Spatial-Temporal Patterns of Diet Quality and Large Herbivore Performance Using Satellite Time Series,* 2022
- **JANSEN VS ; KOLDEN CA ; SCHMALZ HJ.** The Development of Near Real-Time Biomass and Cover Estimates for Adaptive Rangeland Management Using Landsat 7 and Landsat 8 Surface Reflectance Products. *Remote Sensing,* 2018, vol. 10 (7), 1057

- **PULLANAGARI RR ; KERESZTURI G ; YULE I.** Integrating Airborne Hyperspectral, Topographic, and Soil Data for Estimating Pasture Quality Using Recursive Feature Elimination with Random Forest Regression. *Remote Sensing,* 2018, vol. 10 (7), 1117
- **MATTERA et al.** Yield components, light interception and radiation use efficiency of lucerne (Medicago sativa L.) in response to row spacing. *European Journal of Agronomy,* 2013, vol. 45